Europäisches Patentamt

European Patent Office

Office européen des brevets

(19)

(11) Veröffentlichungsnummer: **0 249 753 B1**

(12) **EUROPÄISCHE PATENTSCHRIFT**

(45) Veröffentlichungstag der Patentschrift: **25.09.91**

(51) Int. Cl.⁵: **G01S 1/56**, G01S 1/02

(21) Anmeldenummer: **87107141.1**

(22) Anmeldetag: **18.05.87**

(54) **Nach dem Strahlschwenkverfahren arbeitendes Mikrowellenlandesystem.**

(30) Priorität: **03.06.86 DE 3618628**

(43) Veröffentlichungstag der Anmeldung:
**23.12.87 Patentblatt 87/52**

(45) Bekanntmachung des Hinweises auf die
Patenterteilung:
**25.09.91 Patentblatt 91/39**

(84) Benannte Vertragsstaaten:
**DE ES FR GB**

(56) Entgegenhaltungen:
**EP-A- 0 200 598**
**DE-A- 2 332 322**
**DE-A- 3 131 494**

**ADVANCES IN ELECTRONICS AND ELEC-
TRON PHYSICS, Band 57, 1981, Seiten
311-410, Academic Press; H.W. REDLIEN et
al.: "Microwave landing system: The new international standard"**

**IEEE TRANSACTIONS ON ANTENNAS AND
PROPAGATION, Band AP-33, Nr. 12, 1985,
Seiten 1313-1327, New York, US; J. RONEN et
al.: "Monitoring techniques for phased-array
antennas"**

(73) Patentinhaber: **Standard Elektrik Lorenz Aktiengesellschaft
Lorenzstrasse 10
W-7000 Stuttgart 40(DE)**

(72) Erfinder: **Becker, Klaus
Niersteiner Strasse 41
W-7000 Stuttgart 31(DE)**

(74) Vertreter: **Schmidt, Werner, Dipl.-Phys. et al
Standard Elektrik Lorenz AG Patent- und Lizenzwesen Postfach 30 09 29
W-7000 Stuttgart 30(DE)**

**Beschreibung**

Die Erfindung betrifft ein nach dem Strahl-schwenkverfahren arbeitendes Mikrowellenlande-system wie im Oberbegriff des Anspruchs 1 angegeben.

Dieses Mikrowellenlandesystem ist allgemein bekannt. Beispielsweise wird auf den Artikel "Microwave Landing System: The New International Standard" von H.W.Redlien und R.J.Kelly in Advances in Electronics and Electron Physics, Band 57, Academic Press, Inc., 1981 (ISBN 0-12-014657-6), Seiten 311-410 verwiesen. In diesem Artikel wird das Mikrowellenlandesystem (nachfolgend mit MLS abgekürzt) sehr ausführlich beschrieben. Weiterhin sind dort Hinweise auf andere Literaturstellen zu finden. Bei der genannten Literaturstelle wird insbesondere auf die Seiten 314-317 (Beschreibung des Prinzips), Seite 330 (Beschreibung der Signalfolge der von den einzelnen Stationen abgestrahlten Signale), die Seiten 340-349 (Beschreibung der MLS-Bodenstation), die Seiten 349-357 (Beschreibung des MLS-Bordgerätes) und die Seite 404 (Beschreibung der Überwachung) verwiesen.

Bei allen Funknavigationssystemen, zu denen auch das MLS gehört, ist es von besonders großer Bedeutung, daß die abgestrahlten Signale die vorgegebenen Werte einhalten. Um dies zu überwachen sind bei dem MLS Feldmonitore, Monitore zur integralen Überwachung der Antennenapertur und interne Monitore vorgesehen.

Mit den Feldmonitoren wird überwacht, ob die abgestrahlten Signale im Feld vorschriftsmäßig sind. Bei Feldmonitoren wird unterschieden zwischen Nahfeldmonitoren (in unmittelbarer Nähe der zu überwachenden Station) und Fernfeldmonitoren, die von der zu überwachenden Station mindestens einen Abstand von mehreren hundert Metern haben sollten.

Bei dem MLS sind bodenseitig mindestens eine MLS-Elevationsstation und eine MLS-Azimutstation vorhanden. Auf größeren Flughäfen ist häufig zusätzlich eine sogenannte Backazimutstation vorhanden, die bei Fehlanflügen beim Durchstarten eine Führung in Azimutrichtung ermöglicht.

Das MLS arbeitet mit Frequenzen im Bereich um 5 GHz. Diese hohen Frequenzen machen es notwendig, sorgfältig darauf zu achten, daß in dem Bereich, in den die Signale abgestrahlt werden, möglichst keine Gegenstände, die störende Reflexionen verursachen können, vorhanden sind. Ein solcher "Gegenstand" kann beispielsweise auch die Antenne eines Fernfeldmonitors sein.

Aufgabe der Erfindung ist es, ein nach dem Strahlschwenkverfahren arbeitendes Mikrowellenlandesystem anzugeben, bei dem im Fernfeld eine gute Überwachung der abgestrahlten Signale möglich ist.

Die Lösung dieser Aufgabe erfolgt mit den in Anspruch 1 angegebenen Mitteln. Vorteilhafte Weiterbildungen sind den Unteransprüchen zu entnehmen.

Bei dem neuen MLS wird jeweils eine Station dazu verwendet, die Signale, die von der jeweils anderen Station abgestrahlt werden, im Fernfeld zu überwachen. So werden beispielsweise in der Elevationsstation die von der Azimutstation abgestrahlten Signale überwacht. Hierzu können (bei dem gewählten Beispiel) die in der Elevationsstation zur Nahfeldüberwachung ohnehin vorhandenen Überwachungseinrichtungen mitverwendet werden. Dies ermöglicht eine kostengünstige Lösung. Selbst wenn zur Überwachung der Azimutsignale eine zusätzliche Antenne (in unmittelbarer Nähe oder an der Elevationsstation) vorgesehen wird, ist der zur Überwachung erforderliche Aufwand immer noch gering. Da keine (oder nur an der Stelle, an der ohnehin eine Station vorhanden ist) zusätzlichen Einrichtungen, die Reflexionen verursachen können, notwendig sind, verursacht die Überwachungseinrichtung keine zusätzlichen Störreflexionen.

Bei dem MLS ist vorgesehen, daß alle für die Überwachung relevanten Daten in einer der Stationen (üblicherweise die Azimutstation) zur Verfügung stehen und von dort beispielsweise an den Tower weitergeleitet werden. Deshalb sind die einzelnen Stationen über Daten- und Steuerleitungen mit der Azimutstation verbunden. Bei dem neuen MLS können zur Fernfeldüberwachung diese ohnehin vorhandenen Leitungen mitverwendet werden, was nicht der Fall ist, wenn der Fernfeldmonitor an einer beliebigen Stelle angeordnet ist. Bezüglich der Infrastruktur ist also bei dem neuen MLS zur Fernfeldüberwachung kein zusätzlicher Aufwand erforderlich.

Verwendet man zur Fernfeldüberwachung den Nahfeldmonitor der Backazimutstation, dann können die Azimutsignale genau in der Richtung des Landekurses überwacht werden.

Gemäß einer Weiterbildung wird zur Überwachung diejenige Antenne der Station, in der die Überwachung erfolgt, benützt, mit der auch die zur Landeführung dienenden Signale abgestrahlt werden. Dies hat den Vorteil, daß zum Empfang der zu überwachenden Signale eine Antenne mit einem schmalen Richtstrahl zur Verfügung steht.

Die Erfindung wird anhand der Zeichnungen beispielsweise näher erläutert. Es zeigt:

Fig. 1    einen Zyklus der von den Stationen abgestrahlten Signale, und

Fig. 2    Blockschaltbilder für eine Azimut- und eine Elevationsstation,

Fig. 3    ein Blockschaltbild eines Bordgerätes,

Fig. 4    Einzelheiten des Blockschaltbildes der Elevationsstation nach Fig. 1.

Bei dem MLS werden zur Landeführung in der Azimut- und der Elevationsebene jeweils ein stark gebündelter Strahl geschwenkt. Die Strahlschwenkung erfolgt vorzugsweise elektronisch. Die Winkelinformation erhält man im Empfangsgerät an Bord eines Flugzeuges (Bordgerät) dadurch, daß man die Zeit mißt, die zwischen den Zeitpunkten liegt, zu denen der Strahl in der Hin- und in der Rückrichtung auf das Bordgerät trifft.

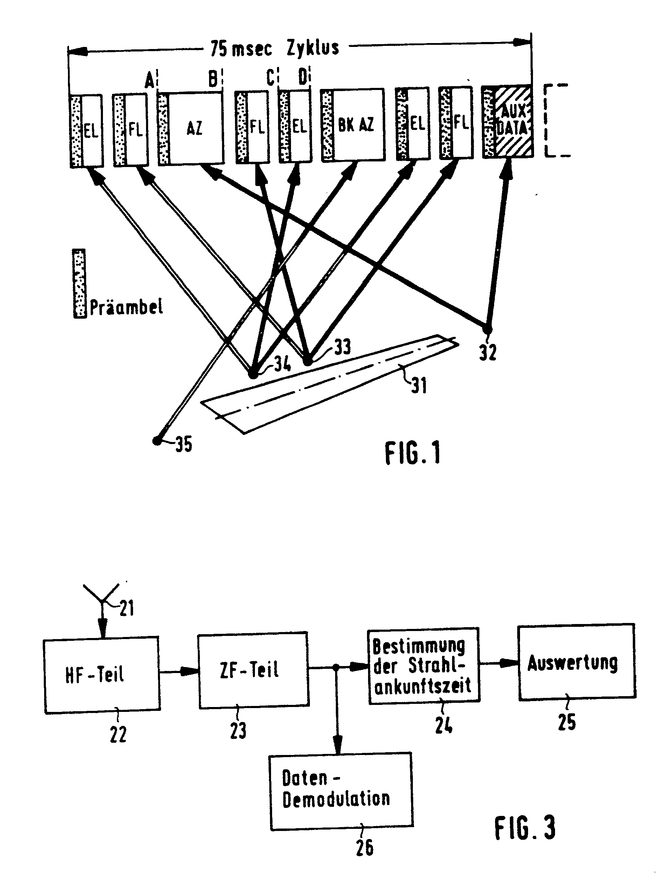

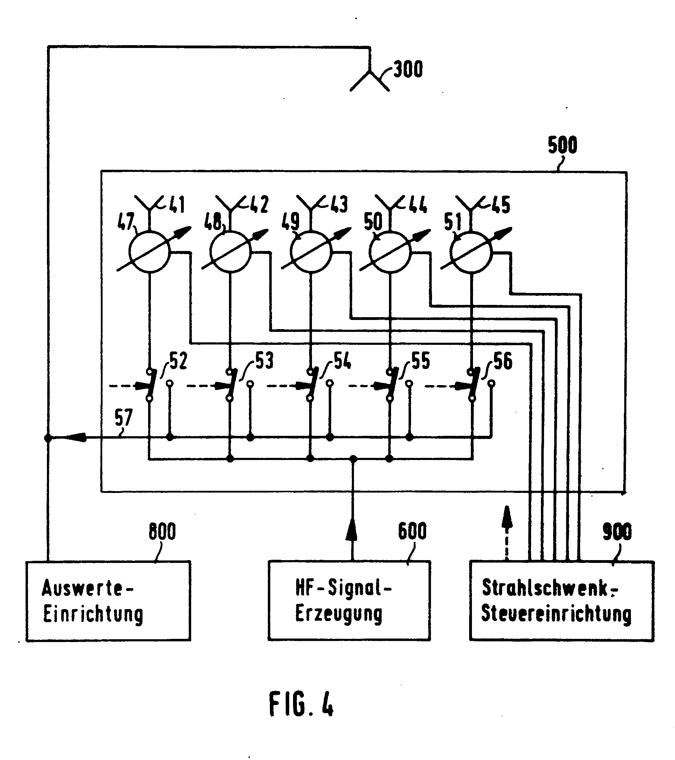

Ähnlich wie bei dem weltweit eingeführten Instrumentenlandesystem ILS sind auch bei dem MLS seitlich der Rollbahn 31 (Fig. 3) eine Elevationsstation 34 und an einem Ende der Rollbahn eine Azimutstation 32 vorgesehen. Für manche Flughäfen ist zusätzlich noch für das Ausschweben eine Flarestation 33 in Diskussion. Um bei einem Fehlanflug in der Abflugrichtung eine Azimutinformation zur Verfügung zu stellen, kann auf dem der Azimutstation gegenüberliegenden Ende der Rollbahn eine Backazimut-Station 35 vorgesehen werden. Die einzelnen Signale werden im Zeitmultiplex abgestrahlt. Ein Zyklus, innerhalb dessen alle erforderlichen Signale abgestrahlt werden, dauert 75 msec. Jedem Signal steht eine Präambel voran, die Daten, auf die hier nicht näher einzugehen ist, enthält. In der Fig. 1 haben die Abkürzungen die nachfolgend aufgelistete Bedeutung:

| | |
|---|---|
| EL: | Daten zur Führung in der Elevationsrichtung |
| FL: | Daten zur Führung beim Ausschweben |
| AZ: | Daten zur Führung in der Azimutrichtung beim Landen |
| BKAZ: | Daten zur Führung in der Azimutrichtung beim Durchstarten nach einem Fehlanflug. |
| AUXDATA: | Zusätzliche Daten. |

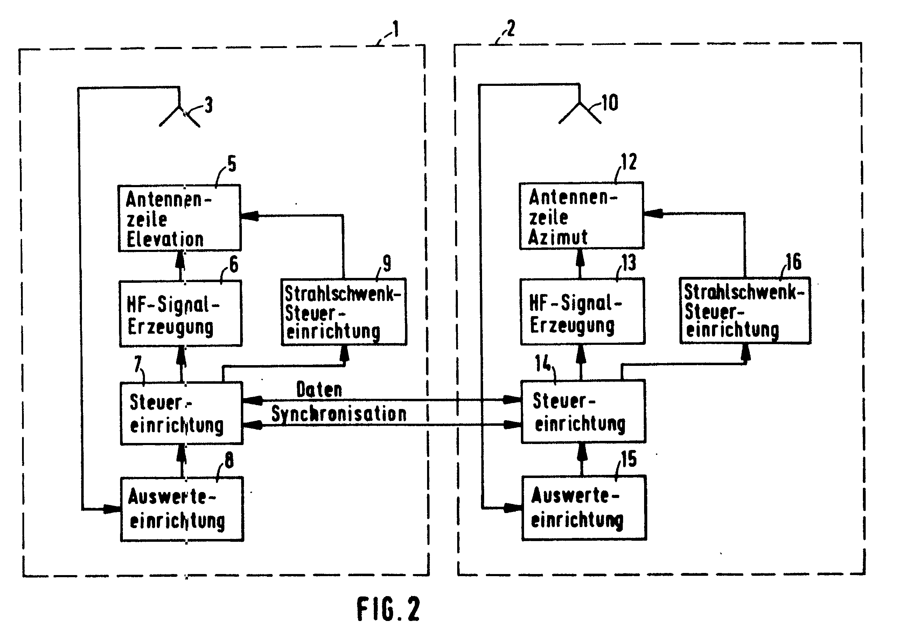

Der Aufbau der Elevations- und Azimutstationen ist aus der Literatur allgemein bekannt und wird hier daher im Einzelnen nicht näher erläutert. Anhand der Fig. 2 werden nur die Teile der Stationen beschrieben, die zum Verständnis der Erfindung benötigt werden. Die Flarestation ist prinzipiell wie die Elevationsstation realisiert; entsprechendes gilt für Backazimutstation und Azimutstation.

Die Azimutstation 2 ist die zentrale Station des gesamten Landesystems. In ihr werden die zur Synchronisation der einzelnen Stationen erforderlichen Signale erzeugt (die Signale müssen im Zeitmultiplex abgestrahlt werden, Fig. 1). In ihr laufen alle Informationen über die Zustände der einzelnen Stationen zusammen; insbesondere die mit Hilfe der von den Überwachungsmonitoren (Nahfeldüberwachung; integrale Überwachung) ermittelten Daten.

Die einzelnen Stationen sind so weit wie möglich modular aufgebaut, und es wird versucht, in beiden Stationen gleichartige Module zu verwenden. So ist es beispielsweise möglich, die Auswerteeinrichtungen 8, 15 in der Azimut- und der Elevationsstation hardwaremäßig gleich zu realisieren. Die beiden Auswerteeinrichtungen unterscheiden sich voneinander nur in der erforderlichen Software.

Sowohl die Azimut- als auch die Elevationsstation weisen jeweils eine Einrichtung 6, 13 zur Erzeugung der HF-Signale auf. Deren Ausgangssignale werden jeweils einer Antennenzeile 5, 12 zugeführt. Anstelle der Antennenzeile kann auch eine Anordnung mit flächig angeordneten Einzelantennen verwendet werden. Die Antennenzeile 5 der Elevationsstation 1 schwenkt eine Strahlungskeule in der Elevationsrichtung. Die Antennenzeile 12 der Azimutstation 2 schwenkt eine Strahlungskeule in der Azimutrichtung. Die Einrichtungen zur Erzeugung der HF-Signale werden jeweils von einer Steuereinrichtung 7, 14 gesteuert. Die Steuereinrichtung 7 der Elevationsstation erhält von der Steuereinrichtung 14 der Azimutstation Synchronisationssignale. Die Steuereinrichtung 7 liefert an die Steuereinrichtung 14 Daten.

Die Steuereinrichtungen 7, 14 steuern jeweils auch eine Strahlschwenksteuereinrichtung 9, 16. Diese wiederum steuern steuerbare Phasenschieber in den Antennenzeilen so, daß die gewünschte Strahlschwenkung realisiert wird. Zur Nahfeldüberwachung weisen beide Stationen jeweils eine Monitorantenne 3, 10 auf, deren Ausgangssignal jeweils einer Auswerteeinrichtung 8, 15 zugeführt werden. Die Überwachungseinrichtungen, bestehend aus Auswerteeinrichtung und Monitorantenne, geben Überwachungsdaten an die jeweiligen Steuereinrichtungen ab. Über die Datenstrecke zwischen der Steuereinrichtung der Elevationsstation und der Steuereinrichtung der Azimutstation werden die Überwachungsdaten, die in der Elevationsstation gewonnen werden, zur Azimutstation geleitet. Mit diesen Überwachungseinrichtungen wird überwacht, ob die von der jeweiligen Station abgestrahlten Signale im Nahfeld die vorgegebenen Parameter einhalten.

Die Überwachungseinrichtungen enthalten jeweils einen Empfangs- und Auswerteteil, der prinzipiell wie ein MLS-Bordgerät realisiert ist. Im Gegensatz zu einem MLS-Gerät, das auf die Frequenzen der MLS-Stationen von unterschiedlichen Flughäfen einstellbar sein muß, muß der Empfänger der Überwachungseinrichtung nur eine Frequenz verarbeiten.

In dem MLS-Bordgerät (Fig. 3) gelangt das von einer Antenne 21 empfangene Signal über einen HF-Teil 22 zu einem ZF-Teil 23. Das ZF-Signal wird einerseits einer Einrichtung 26 zur Datendemodulation und andererseits einer Einrichtung 24 zugeführt. In dieser Einrichtung 24 wird der Zeitpunkt ermittelt, zu dem die geschwenkten Strahlen auf das Bordgerät treffen. Die Auswertung erfolgt in einer Auswerteeinrichtung 25. Die Funktionsweise und die Realisierung des MLS-Bordgerätes ist allgemein bekannt und wurde deshalb hier nur kurz skizziert.

In den Bodenstationen des neuen MLS werden die Auswerteeinrichtungen 8, 15 und die Monitorantennen 3, 10 nicht nur dazu verwendet, zu überwachen ob die von der betroffenen Station abgestrahlten Signale im Nahfeld die vorgegebenen Parameter einhalten, sondern sie werden auch zur Fernfeldüberwachung der von einer anderen Station abgestrahlten Signale verwendet. Es ist möglich, in jeweils einer Station die Fernfeldüberwachung der von den anderen Stationen abgestrahlten Signale vorzunehmen. Andererseits ist auch möglich, jeweils eine Station dazu zu verwenden, um im Fernfeld die Signale jeweils einer anderen Station zu überwachen. So wie nämlich die Elevationsstation mit der Azimutstation über eine Datenstrecke zur Daten- und Synchronisationssignal-Übertragung verbunden ist, stehen auch alle anderen Stationen mit der Azimutstation verbunden. Verwendet man die Backazimutstation zur Fernfeldüberwachung der von der Azimutstation abgestrahlten Signale, dann werden diese genau in Landekursrichtung überwacht, was für eine sorgfältige Überwachung der Landekurssignale von besonderem Vorteil ist.

Nachfolgend wird davon ausgegangen, daß in der Elevationsstation 1 die Fernfeldüberwachung der von der Azimutstation 2 abgestrahlten Signale erfolgt.

Wie der Fig. 1 zu entnehmen ist, strahlt zu einer bestimmten Zeit nur eine Station Signale ab. Zwischen den Zeitpunkten A und B ist nur die Azimutstation aktiv; die Elevationsstation strahlt keine Signale ab. Während dieser Zeit empfängt die Monitorantenne 3 de Elevationsstation die Azimutsignale. Diese gelangen zur Auswerteeinrichtung 8 in der Elevationsstation und werden dort ausgewertet und zwar anstelle der Elevationssignale, die während den Zeiten (z. B. zwischen D und E, Fig. 1), während denen die Elevationsstation aktiv ist, ausgewertet werden. Die in der Auswerteeinrichtung ermittelten Werte müssen jetzt anstatt mit den Sollwerten für die Elevationssignale mit den Sollwerten der Azimutsignale verglichen werden.

Die Elevationsstation befindet sich in bezug auf die Azimutstation im Fernfeld. Somit erfolgt bei dem neuen MLS in der Elevationsstation eine Fernfeldüberwachung für die Azimutsignale. Die Nahfeldüberwachung der Elevationssignale und die Fernfeldüberwachung der Azimutsignale erfolgt in der Elevationsstation im Zeitmultiplex.

Auf die Durchführung der Azimutüberwachung wird hier im einzelnen nicht näher eingegangen, da sie prinzipiell wie die Elevationsüberwachung erfolgt.

Nachfolgend werden noch einige Weiterbildungen erläutert und zwar wiederum für das Beispiel, bei dem in der Elevationsstation die Fernfeldüberwachung der Azimutsignale erfolgt.

Auf einem Flughafen werden außer den MLS-Signalen noch zahlreiche andere Funksignale, z. B. Radarsignale, abgestrahlt. Weiterhin können auf Flughäfen mit mehr als einer Landebahn auch mehr als ein MLS installiert sein. Deshalb ist es von Vorteil, in die Leitung zwischen Monitorantenne 3 und Auswerteeinrichtung 8 geeignete Filter einzufügen. Deren Durchlaßbereich ist so gewählt, daß nur die Frequenzen der zu überwachenden Signale durchgelassen werden.

Es ist bekannt, zu welchem Zeitpunkt das zu überwachende Signal auf die Überwachungsantenne trifft. Es ist daher möglich, in die Leitung zwischen Monitorantenne 3 und Auswerteeinrichtung 8 eine Zeittorschaltung einzufügen, die die von der Monitorantenne empfangenen Signale nur während den Zeiten zu der Auswerteeinrichtung durchläßt, während denen zu überwachende Signale erwartet werden. Die Steuersignale können von der Steuereinrichtung 14 der Azimutstation über die Synchronisationsleitung zu der Elevationsstation geleitet werden. Die Zeittorschaltung kann auch in der Auswerteeinrichtung realisiert sein. Die Realisierung im Einzelnen ist fachmännisches Wissen und wird deshalb hier nicht näher erläutert.

Es ist von Vorteil, wenn die zur Überwachung auszuwertenden Signale verstärkt werden, bevor sie der Auswerteeinrichtung zugeführt werden.

Bei der bisherigen Beschreibung wurde davon ausgegangen, daß zur Fernfeldüberwachung der Azimutsignale die Monitorantenne der Elevationsstation verwendet wird. Es kann bei manchen Installationen von Vorteil sein, für die Fernfeldüberwachung der Azimutsignale eine separate Antenne vorzusehen, die für den Empfang der Azimutsignale sowohl bezüglich der räumlichen Anordnung als auch bezüglich der Realisierung optimiert ist.

Auch in diesem Fall wird die Auswerteeinrichtung der Elevationsstation mitverwendet. Die Plazierung der Antenne kann in unmittelbarer Nähe der an der Elevationsstation erfolgen.

Anhand der Fig. 4 wird eine weitere Möglichkeit zur Realisierung der Antenne für die Fernfeldüberwachung der Azimutsignale, angegeben. Sie ist insbesondere dann von Vorteil; wenn die Überwachung der Azimutsignale in der Backazimutstation erfolgt (wenn eine Rollbahn an beiden Enden eine Azimutstation aufweist und somit Landungen in beiden Richtungen möglich sind, dann ist in diesem Fall eine Azimutstation abhängig von der Anflugrichtung Azimutstation oder Backazimutstation. Wie aus Fig. 1 ersichtlich wird während der Zeit, während der das Azimutsignal abgestrahlt wird, von der Backazimutstation kein Signal abgestrahlt. Während dieser Zeit kann also die Antennenzeile der Backazimutstation, die zur Abstrahlung der Backazimutsignale verwendet wird, zum Empfang der Azimutsignale ausgenutzt werden.

In der Fig. 4 sind eine Auswerteeinrichtung 800, eine Einrichtung zur Erzeugung der HF-Signale 600 und eine Monitorantenne 300 der Backazimutstation dargestellt. Die Monitorantenne 300, die Auswerteeinrichtung 800 und die Einrichtung 600 zur Erzeugung der HF-Signale sind wie die ihnen entsprechenden Einrichtungen der Elevationsstation realisiert. Weiterhin sind eine Antennenzeile 500 und eine Strahlschwenksteuereinrichtung 900 vorgesehen.

Die Antennenzeile 500 enthält, wie bei der bekannten Elevationsstation, mehrere Einzelantennen 41 bis 45, denen über steuerbare Phasenschieber 47 bis 51 die HF-Signale zugeführt werden; bei der Backazimutstation von der Einrichtung 600. Zusätzlich vorgesehen sind Schalter 52 bis 56, die in die Speiseleitungen zwischen die Einrichtung 600 und die steuerbaren Phasenschieber eingefügt sind.

Die Strahlschwenksteuereinrichtung 900 steuert nicht nur die steuerbaren Phasenschieber so, daß die gewünschte Strahlschwenkung erreicht wird, sondern sie steuert auch die Schalter (gestrichelte Linien). Zu der Zeit, zu der das Azimutsignal erwartet wird, werden die steuerbaren Phasenschieber von der Strahlschwenksteuereinrichtung so eingestellt, daß das Strahlungsdiagramm, das sich bei dieser Phasenschiebereinstellung ergibt, in Richtung der Azimutstation zeigt. Außerdem werden während dieser Zeit die Schalter 52 bis 56 so geschaltet, daß die Leitungen zu der Einrichtung 6 zur Erzeugung der HF-Signale unterbrochen sind. Statt dessen werden die von Antennen empfangenen Signale während dieser Zeit über die Schalter zu einer Leitung 57 zugeführt, über die sie zu der Auswerteeinrichtung 800 weitergeleitet werden.

**Patentansprüche**

1. Mikrowellenlandesystem das nach dem Strahlschwenkverfahren arbeitet, mit einer Azimutstation (2), einer Elevationsstation (1) und gegebenenfalls einer Backazimutstation, bei dem alle Stationen jeweils eine zur Strahlschwenkung geeignete Antenne (5,12) aufweisen und bei dem in jeder der vorhandenen Stationen eine Überwachungseinrichtung vorgesehen ist, welche zur Überwachung der von der jeweiligen Station abgestrahlten Signale im Nahfeld dient und welche eine Überwachungsantenne (3,10) und eine Auswerteeinrichtung (8,15) enthält, dadurch gekennzeichnet, daß die ohnehin vorhandene Auswerteeinrichtung (8,15) für die Nahfeldüberwachung der von der jeweiligen Station (1,2) abgestrahlten Signale auch zur Feldfernüberwachung der von der anderen Station (1,2) abgestrahlten Signale verwendet wird, daß als Überwachungsantenne für die zu überwachenden Fernfeldsignale die zur Strahlschwenkung verwendete Antenne (500) mitverwendet wird, und daß die Nah- und Fernfeldüberwachung im Zeitmultiplex durchgeführt werden.

2. Mikrowellenlandesystem nach Anspruch 1 dadurch gekennzeichnet daß als Überwachungsantenne für die zu überwachenden Fernfeldsignale statt der zur Strahlschwenkung verwendeten Antenne (500) die Nahfeldüberwachungsantenne (3, 10) verwendet wird.

3. Mikrowellenlandesystem nach Anspruch 1 dadurch gekennzeichnet daß als Überwachungsantenne für die zu überwachenden Fernfeldsignale statt der zur Strahlschwenkung verwendeten Antenne (500) eine separate Überwachungsantenne verwendet wird.

4. Mikrowellenlandesystem nach einem der Ansprüche 1 bis 3, dadurch gekennzeichnet, daß zwischen die Überwachungsantenne für die Fernfeldsignale und die Auswerteeinrichtung ein Bandpaßfilter eingefügt ist, dessen Durchlaßbereich so gewählt ist, daß nur Signale, die von einem Mikrowellenlandesystem stammen, durchgelassen werden.

5. Mikrowellenlandesystem nach Anspruch 4, dadurch gekennzeichnet, daß ein weiteres Bandpaßfilter vorgesehen ist, dessen Durchlaßbereich auf die Frequenz der zu überwachenden Fernfeldsignale abgestimmt ist.

6. Mikrowellenlandesystem nach einem der Ansprüche 1 bis 3, dadurch gekennzeichnet, daß zwischen die Überwachungsantenne für die Fernfeldsignale und die Auswerteeinrichtung Zeittorschaltungen eingefügt sind, die so gesteuert werden, daß sie nur zu den Zeiten Signale zur Auswerteeinrichtung durchlassen, zu denen die zu überwachenden Fernfeldsignale erwartet werden.

7. Mikrowellenlandesystem nach einem der vorhergehenden Ansprüche, dadurch gekennzeichnet, daß die zur Überwachung auszuwertenden Signale in der Auswerteeinrichtung selbst oder in einem Verstärker, der zwischen der zur Überwachung dienenden Antenne und der Auswerteeinrichtung angeordnet ist.

## Claims

1. Scanning-beam microwave landing system comprising an azimuth station (2), an elevation station (1) and, in an expanded configuration, a back azimuth station each of which has an antenna (5, 12) suitable for beam scanning and includes monitoring means serving to monitor the signals from the respective station in the near field and containing a monitoring antenna (3, 10) and an evaluation unit (8, 15), **characterized in** that the evaluation unit (8, 15) for monitoring the signals from the respective station (1, 2) in the near field is also used for monitoring the signals from the respective other station (1, 2) in the far field, that the antenna (500) used for beam scanning is also used for monitoring the far-field signals, and that the near- and far-field monitoring functions are performed on a time-division-multiplex basis.

2. A scanning-beam microwave landing system as claimed in claim 1, characterized in that instead of the antenna (500) used for beam scanning, the near-field-monitoring antenna (3, 10) is used for monitoring the far-field signals.

3. A scanning-beam microwave landing system as claimed in claim 1, characterized in that instead of the antenna (500) used for beam scanning, a separate monitoring antenna is used for monitoring the far-field signals.

4. A scanning-beam microwave landing system as claimed in any one of claims 1 to 3, characterized in that a bandpass filter whose passband is chosen so that only signals from a microwave landing system are passed is interposed between the monitoring antenna for the far-field signals and the evaluation unit.

5. A scanning-beam microwave landing system as claimed in claim 4, characterized in that an additional bandpass filter is provided whose passband is adapted to the frequency of the far-field signals to be monitored.

6. A scanning-beam microwave landing system as claimed in any one of claims 1 to 3, characterized in that between the monitoring antenna for the far-field signals and the evaluation unit, time gates are inserted which are controlled so as to pass signals to the evaluation unit only during the times that the far-field signals to be monitored are expected.

7. A scanning-beam microwave landing system as claimed in any one of the preceding claims, characterized in that the signals to be evaluated for monitoring purposes are amplified in the evaluation unit or in an amplifier interposed between the monitoring antenna and the evaluation unit.

## Revendications

1. Système d'atterrissage à microondes fonctionnant selon le principe des faisceaux battants, avec une station d'azimut (2), une station de site (1) et éventuellement une station d'azimut arrière, dans lequel toutes les stations présentent respectivement une antenne (5, 12) appropriée pour le balayage des faisceaux et dans lequel il est prévu dans chacune des stations présentes un dispositif de surveillance qui sert à la surveillance dans le champ proche des signaux rayonnés par la station respective et qui comprend une antenne de surveillance (3, 10) et un dispositif de traitement (8, 15) *caractérisé en ce que* le dispositif de traitement (8, 15) existant quoi qu'il en soit pour la surveillance de champ proche des signaux rayonnés par la station respective (1, 2) est aussi utilisé pour la surveillance de champ lointain des signaux rayonnés par l'autre station (2, 1), *en ce qu'*on recourt comme antenne de surveillance des signaux de champ lointain à surveiller à l'antenne (500) employée pour le balayage des faisceaux et *en ce que* la surveillance de champ proche et de champ lointain est réalisée en multiplexage temporel.

2. Système d'atterrissage à microondes selon la revendication 1 *caractérisé en ce que,* comme antenne de surveillance des signaux de champ lointain à surveiller, on utilise l'antenne de surveillance de champ proche (3, 10) au lieu de l'antenne (500) employée pour le balayage des faisceaux.

3. Système d'atterrissage à microondes selon la revendication 1 *caractérisé en ce que,* comme antenne de surveillance des signaux de champ lointain à surveiller, on utilise une antenne de surveillance séparée au lieu de l'antenne (500) employée pour le balayage des faisceaux.

4. Système d'atterrissage à microondes selon l'une des revendications 1 à 3 *caractérisé en ce qu'*il est intercalé entre l'antenne de surveillance des signaux de champ lointain et le dispositif de traitement un filtre passe-bande dont la bande passante est choisie de sorte que seuls ne passent les signaux provenant d'un système d'atterrissage à microondes.

5. Système d'atterrissage à microondes selon la revendication 4 *caractérisé en ce qu'*il est prévu un autre filtre passe-bande dont la bande passante est réglée sur la fréquence des signaux de champ lointain à surveiller.

6. Système d'atterrissage à microondes selon l'une des revendications 1 à 3 *caractérisé en ce qu'*il est intercalé entre l'antenne de surveillance des signaux de champ lointain et le dispositif de traitement des opérateurs temporels qui sont commandés de sorte qu'ils ne laissent passer des signaux vers le dispositif de traitement qu'aux instants où les signaux de champ lointain à surveiller sont attendus.

7. Système d'atterrissage à microondes selon l'une des revendications précédentes *caractérisé en ce que* les signaux à traiter pour la surveillance sont amplifiés dans le dispositif de traitement lui-même ou dans un amplificateur qui est agencé entre l'antenne servant à la surveillance et le dispositif de traitement.

FIG.1

FIG.3

Strahlschwenk-Steuer-einrichtung 16

Antennen-zeile Azimut 12

HF-Signal-Erzeugung 13

Steuer-einrichtung 14

Auswerte-einrichtung 15

10

2

Strahlschwenk-Steuer-einrichtung 9

Antennen-zeile Elevation 5

HF-Signal-Erzeugung 6

Steuer-einrichtung 7

Auswerte-einrichtung 8

3

1

Daten Synchronisation

FIG. 2

EP 0 249 753 B1

FIG. 4

10